(19) Europäisches Patentamt / European Patent Office / Office européen des brevets

(11) **EP 2 626 515 B1**

(12) **EUROPÄISCHE PATENTSCHRIFT**

(45) Veröffentlichungstag und Bekanntmachung des Hinweises auf die Patenterteilung:
**17.06.2020 Patentblatt 2020/25**

(51) Int Cl.:
**F01D 5/14** *(2006.01)* **F01D 9/04** *(2006.01)*
**F04D 29/38** *(2006.01)*

(21) Anmeldenummer: **12154944.8**

(22) Anmeldetag: **10.02.2012**

(54) **Tandem-Schaufelgruppenanordnung**

Tandem blade group assembly

Agencement de groupes d'aubes en tandem

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.08.2013 Patentblatt 2013/33**

(73) Patentinhaber:
• **MTU Aero Engines AG**
  **80995 München (DE)**
• **Deutsches Zentrum für Luft- und Raumfahrt e.V.**
  **51147 Köln (DE)**

(72) Erfinder:
• **Elorza Gomez, Sergio**
  **80997 München (DE)**
• **Schneider, Tim**
  **85221 Dachau (DE)**
• **Hergt, Alexander**
  **53111 Bonn (DE)**
• **Siller, Ulrich**
  **53332 Bornheim (DE)**

(74) Vertreter: **Marschall, Stefan**
**Elbpatent**
**Marschall & Partner**
**Patent- und Rechtsanwaltskanzlei mbB**
**Bavariaring 26**
**80336 München (DE)**

(56) Entgegenhaltungen:
EP-A1- 2 351 920  WO-A1-2008/060195
DE-A1-102008 040 698  DE-A1-102009 013 399
DE-C- 390 486  US-A- 3 195 807

**Beschreibung**

Die Erfindung betrifft eine Schaufelgruppenanordnung nach dem Oberbegriff des Patentanspruchs 1 sowie eine Strömungsmaschine.

Die maximale Umlenkung einer Schaufelreihe einer Strömungsmaschine und somit deren aerodynamische Belastbarkeit ist zum einen durch eine Strömungsablösung am Schaufelprofil begrenzt. Zum anderen wird die maximale Umlenkung durch eine Ablösung einer Grenzschichtströmung an Naben und gehäuseseitigen Seitenwänden begrenzt. Zur Erhöhung der Umlenkfähigkeit von Schaufelreihen sind zwei- und mehrfache Schaufelreihengruppen bekannt. Beispielhafte zweifache Schaufelreihengruppen sind in Figur 1 gezeigt. Weitere bei- spielhafte zweifache Schaufelreihengruppen sind in der DE 10 2009 013 399 A1 sowie in der EP 0 823 540 B1 beschrieben.

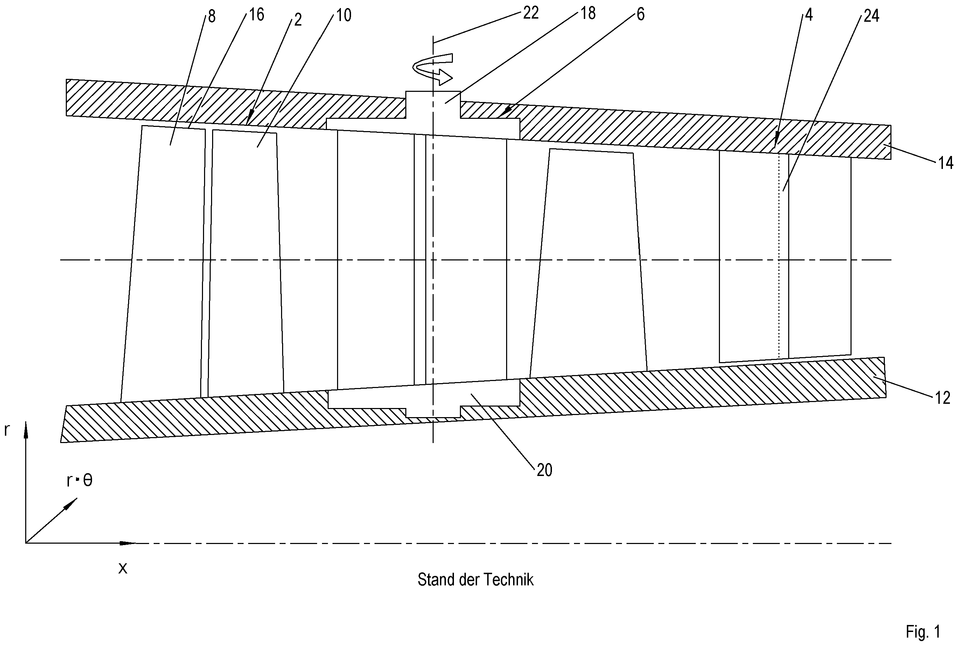

Die in Figur 1 gezeigten Schaufelreihengruppen sind eine rotorseitige Schaufelreihengruppe 2, eine statorseitige Schaufelreihengruppe 4 und eine verstellbare Schaufelreihengruppe 6. Die Schaufelreihengruppen 2, 4, 6 werden jeweils durch eine Vielzahl von Schaufelgruppenanordnung gebildet, die als bekannte Tandemschaufelanordnungen mit jeweils zwei in Strömungsrichtung hintereinander angeordneten Schaufeln 8, 10 ausgebildet sind. Die vorderen Schaufeln 8 und die hinteren Schaufeln 10 bilden jeweils eine Schaufelreihe.

Die rotorseitige Schaufelreihengruppe 2 und die statorseitige Schaufelreihengruppe 4 sind jeweils fest mit einer Nabe 12 bzw. mit einem Gehäuse 14 verbunden, wobei zwischen Blattspitzen der Schaufeln 8, 10 und dem Gehäuse 14 bzw. der Nabe 12 ein Dichtspalt 16 gebildet ist. Die Schaufeln 8, 10 der verstellbaren Schaufelreihengruppe 6 sind endseitig jeweils an einem Drehteller 18, 20 gelagert und gemäß dem Drehpfeil um eine Querachse 22 verschwenkbar. Die Schaufeln 8, 10 können in Axialrichtung voneinander beabstandet sein (rotorseitige Schaufelreihengruppe 2 und verstellbare Schaufelreihengruppe 6) oder einen Überdeckungsbereich 24 bilden (statorseitige Schaufelreihengruppe 4).

Weiterer Stand der Technik ist zudem aus den folgenden Druckschriften bekannt: US 3 195 807 A, DE 10 2008 040698 A1, DE 390 486 C, WO 2008/060195 A1 und EP 2 351 920 A1.

Aufgabe der Erfindung ist es, eine Schaufelgruppenanordnung für eine Strömungsmaschine zur Bildung einer Schaufelreihengruppe zu schaffen, die einen hohen Wirkungsgrad ermöglicht. Des Weiteren ist es Aufgabe der Erfindung, eine Strömungsmaschine mit einem hohen Wirkungsgrad zu schaffen.

Diese Aufgabe wird gelöst durch eine Schaufelgruppenanordnung mit den Merkmalen des Patentanspruchs 1 und durch eine Strömungsmaschine mit den Merkmalen des Patentanspruchs 6.

Eine erfindungsgemäße Schaufelgruppenanordnung für eine Strömungsmaschine zur Bildung einer Schaufelreihengruppe hat eine vordere Schaufel und eine hintere Schaufel, die in Axial- und Umfangsrichtung versetzt zueinander angeordnet sind und einen Überdeckungsbereich bilden, der zwischen einer Druckseite der vorderen Schaufel und zwischen einer Saugseite der hinteren Schaufel verläuft.

Erfindungsgemäß haben die Schaufeln im Überdeckungsbereich einen konvergenten Verlauf mit einem Kontraktionsverhältnis zwischen einer Eintrittsfläche und einer Austrittsfläche von $\geq$ 1,2. Es hat sich weiterhin gezeigt, dass zur Erzielung des hohen Wirkungsgrades ein maximales Kontraktionsverhältnis nicht überschritten werden sollte. Das maximale Kontraktionsverhältnis beträgt 2,8, so dass sich das Kontraktionsverhältnis in einem Bereich von 1,2 bis 2,8 bewegt.

Es ist erkannt worden, dass sich mit einem bestimmten Kontraktionsverhältnis bei einem konvergenten Verlauf eine besonders geringe Verlustentwicklung und ein besonders stabiles Umlenkverhalten realisieren lässt. Durch die Realisierung des erfindungsgemäßen Kontraktionsverhältnisses lassen sich somit strömungsmechanisch optimierte Schaufelgruppenanordnung wie Tandemschaufelanordnungen und insbesondere auch Schaufelgruppenreihen mit einem hohen bzw. gegenüber bekannten Schaufelgruppenanordnungen gesteigerten Wirkungsgrad erzielen. Das Kontraktionsverhältnis ist jedoch nicht auf Tandemschaufelanordnungen begrenzt, sondern kann auch bei Schaufelgruppenanordnungen mit mehr als zwei in Axial- und Umfangsrichtung versetzt zueinander angeordneten Schaufeln eingestellt werden.

Bei einem besonders bevorzugten Ausführungsbeispiel weist das Kontraktionsverhältnis einen Wert von 1,7 auf.

Zusätzlich ist es zur Steigerung des Wirkungsgrades vorteilhaft, wenn eine Saugseite der hinteren Schaufel stromab der Austrittsfläche eine größere Krümmung als stromauf der Austrittfläche aufweist.

Bevorzugterweise hat die Krümmung ein Maximum vom 1,6-Fachen bis zum 1,7-Fachen einer mittleren Krümmung der Saugseite der hinteren Schaufel.

Bei einem bevorzugten Ausführungsbeispiel liegt das Krümmungsmaximum etwa 5 % bis 25 % relativer Skelettlinienlänge hinter der Austrittsfläche des Überdeckungsbereichs.

Eine bevorzugte Strömungsmaschine hat zumindest eine Schaufelreihengruppe mit einer Vielzahl von erfindungsgemäßen Schaufelgruppenanordnungen. Eine derartige Strömungsmaschine zeichnet sich durch einen hohen Wirkungsgrad und somit durch eine hohe Effizienz aus.

Sonstige vorteilhafte Ausführungsbeispiele der Erfindung sind Gegenstand weiterer Unteransprüche.

Im Folgenden werden bevorzugte Ausführungsbeispiele der Erfindung anhand schematischer Darstellungen näher erläutert. Es zeigen:

Figur 1    beispielshafte bekannte Schaufelreihengruppen einer Strömungsmaschine,

Figur 2    eine Draufsicht auf eine Axialebene einer verdichterseitigen Schaufelreihengruppe mit einer Vielzahl von erfindungsgemäßen Schaufelgruppenanordnungen,

Figur 3    eine Detaildarstellung eines Überdeckungsbereichs mit einer skizzierten Querschnittsfläche,

Figur 4    eine Detaildarstellung eines Überdeckungsbereichs mit einer skizzierten Eintrittsfläche und Austrittsfläche, und

Figur 5    einen erfindungsgemäßen Krümmungsverlauf einer hinteren Schaufel einer Tandemschaufelanordnung.

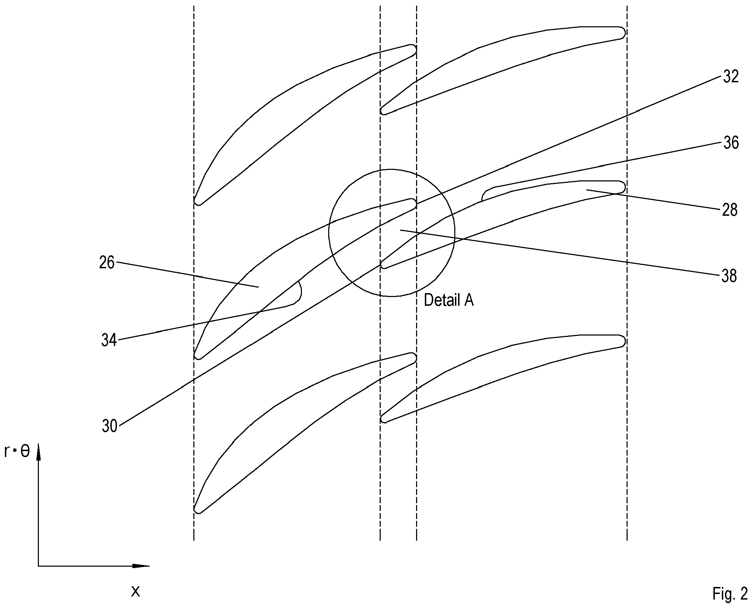

Figur 2 zeigt eine Draufsicht auf einen Umfangsabschnitt einer Schaufelreihengruppe einer Strömungsmaschine, beispielsweise eine stationäre Gasturbine oder ein Flugzeugtriebwerk.

Die Schaufelreihengruppe wird von einer Vielzahl von Schaufelgruppenanordnungen wie Tandemschaufelanordnungen gebildet, die jeweils zwei in Axialrichtung und Umfangsrichtung versetzt zueinander angeordnete Schaufeln 26 und 28 aufweisen. Die Schaufeln 26, 28 bilden jeweils eine Schaufelreihe und haben jeweils eine sich in Radialrichtung erstreckende Vorderkante 30 und eine sich in Radialrichtung erstreckende Hinterkante 32. Die vorderen Schaufeln 26 sind mit ihren Hinterkanten 32 stromab der Vorderkanten 30 der hinteren Schaufeln 28 angeordnet, wodurch zwischen Druckseiten 34 der vorderen Schaufeln 26 und Saugseiten 36 der hinteren Schaufeln 28 jeweils ein Überdeckungsbereich 38 gebildet wird.

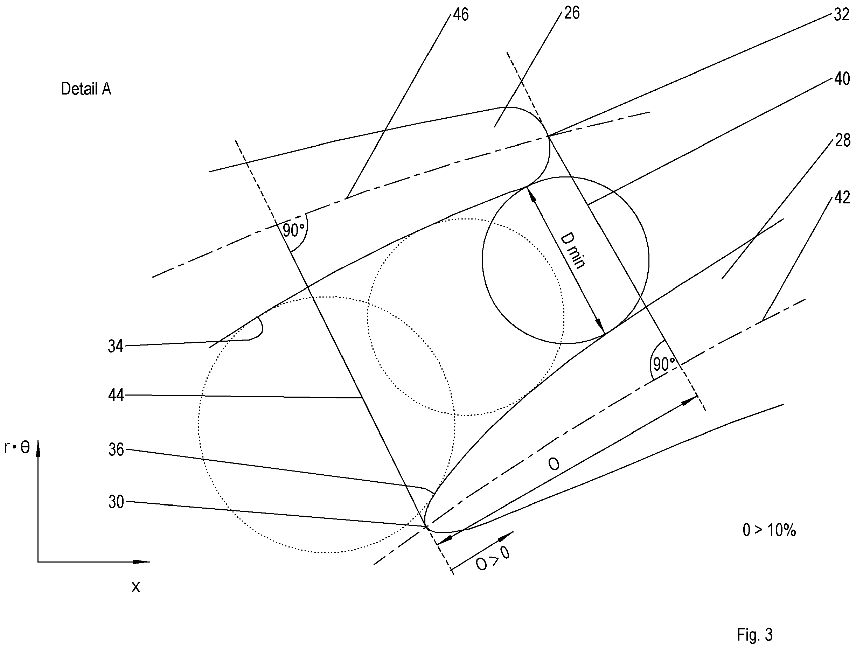

Wie in der Detailansicht A in Figur 3 gezeigt, weist der Überdeckungsbereich 38 einen Überdeckungsgrad O auf, der durch Fällen eines Lotes 40 von der Hinterkante 32 der vorderen Schaufel 26 auf eine Skelettlinie 42 der hinteren Schaufel 28 bestimmt wird. Der Abstand zwischen der Vorderkante 30 und dem Schnittpunkt zwischen dem Lot 40 und der Skelettlinie 42 der hinteren Schaufel 28 ist der Überdeckungsgrad O. Dabei wird der Überdeckungsgrad O positiv von Vorderkante 30 in Richtung der hinteren Schaufel 28 bestimmt. Grundsätzlich weist jeder Überdeckungsbereich einen druckseitigen und einen saugseitigen Überdeckungsgrad O auf, die jeweils getrennt für die Druckseite 34 und die Saugseite 36 bestimmt werden. Der druckseitige Überdeckungsgrad (nicht skaliert) wird durch Fällen eines Lotes 44 von der Vorderkante 30 der hinteren Schaufel 28 auf eine Skelettlinie 46 der vorderen Schaufel 26 ermittelt. Der Abstand zwischen der Hinterkante 32 der vorderen Schaufel 26 und dem Schnittpunkt zwischen dem Lot 44 und der Skelettlinie 46 ist der saugseitige Überdeckungsgrad.

Der Überdeckungsbereich 38 hat einen konvergenten Flächenverlauf. D.h. die Druckseite 34 und die Saugseite 36 verlaufen in Strömungsrichtung düsenartig verjüngt zueinander. Da eine zweidimensionale Betrachtung erfolgt, ist eine Querschnittsfläche $D_{min}$ stets als Schaufelabstand multipliziert mit einer radialen Einheitshöhe zu verstehen.

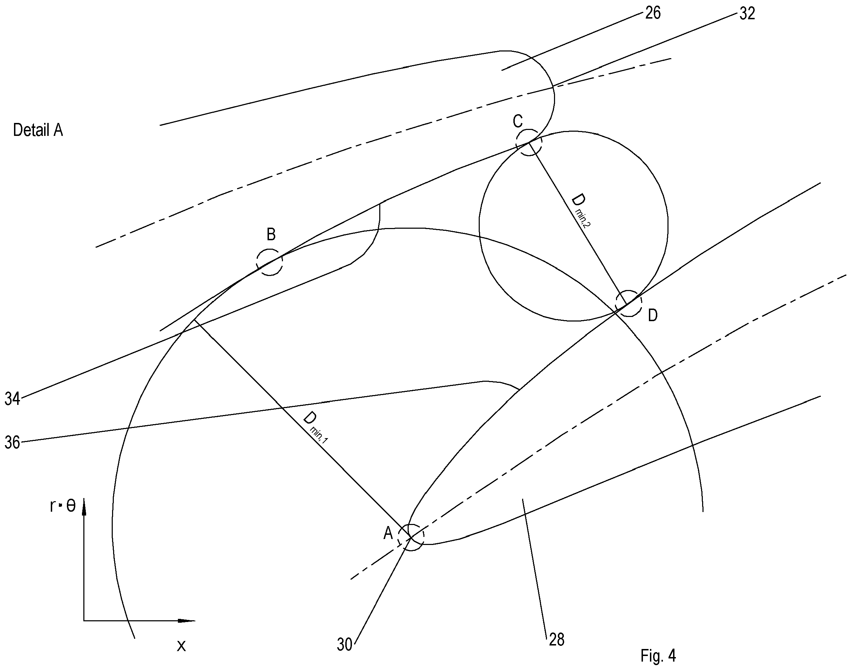

Wie in Figur 4 skizziert, hat der Überdeckungsbereich 38 eine Eintrittsfläche $D_{min,1}$, die als kleinster Abstand (Strecke A-B) zwischen den Vorderkanten 30 der hinteren Schaufeln 28 und den Druckseiten 34 der vorderen Schaufeln 26 definiert ist. Zudem hat der Überdeckungsbereich 38 eine kleinere Austrittsfläche bzw. Engfläche $D_{min,2}$, die durch den kleinsten Abstand (Strecke C-D) zwischen den Saugseiten 36 der hinteren Schaufeln 28 und den Druckseiten 34 der vorderen Schaufel 26 beschrieben ist.

Zwischen diesen beiden Flächen $D_{min,1}$, $D_{min,2}$, respektive Abständen ist ein Kontraktionsverhältnis KV definiert, für das erfindungsgemäß gilt: $KV = D_{min,1} / D_{min,2}$, mit $1{,}2 \leq KV \leq 2{,}8$. Bevorzugt wird ein Kontraktionsverhältnis KV mit einem Wert von $KV = 1{,}7$.

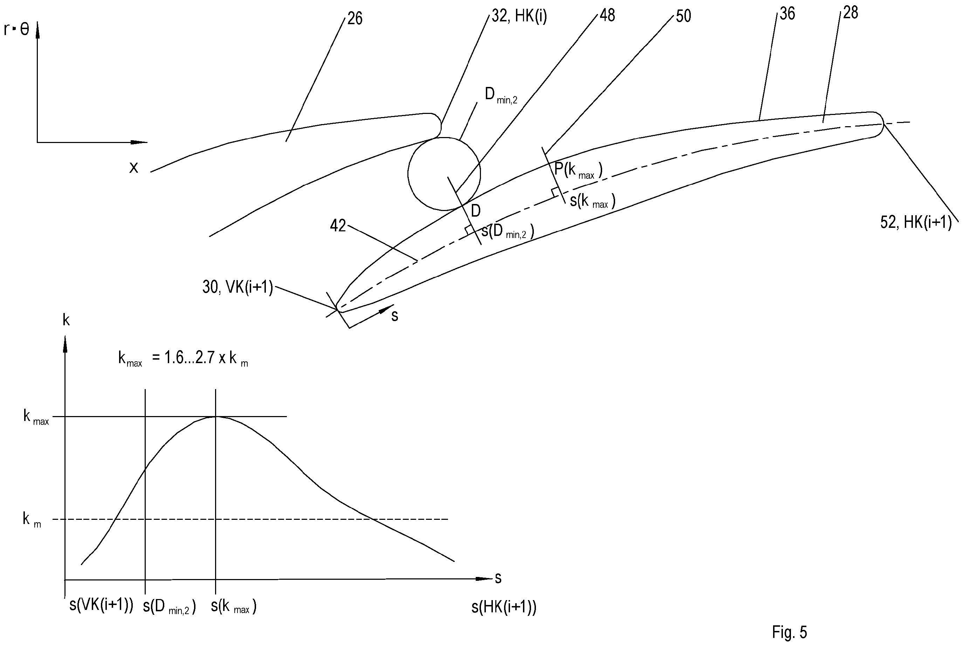

In Figur 5 ist eine bevorzugte saugseitige Profilkrümmung der hinteren Schaufeln 28 gezeigt. Jede Schaufeloberfläche weist, wie in dem Diagramm links unten dargestellt, einen Krümmungsverlauf auf, welcher als Krümmung k über zum Beispiel der Laufkoordinate s entlang der Skelettlinie 42 aufgetragen wird. Dabei wird vornehmlich nur die saugseitige Profilkrümmung der hinteren Schaufeln 28 zwischen 2 % und 98 % der Skelettlinienlänge betrachtet. Für die Saugseite 36 der hinteren Schaufeln 28 kann eine mittlere Krümmung $k_m$ ermittelt werden. Der saugseitige Krümmungsverlauf der stromab liegenden Schaufeln 28 hat ein Maximum $k_{max}$, welches erfindungsgemäß die folgende Bedingung erfüllt: $1{,}6 \times k_m \leq k_{max} \leq 2{,}7 \times k_m$. Bevorzugterweise gilt: $k_{max} = 2{,}5 \times k_m$.

Die Lage des Krümmungsmaximums $k_{max}$ wird, wie rechts oben in Figur 5 veranschaulicht, wie folgt beschrieben: Durch Fällen eines Lotes 48 von dem Punkt D auf der Saugseite 36 der hinteren Schaufel 28 auf ihre Skelettlinie 42 wird ein Abstand der Austrittsfläche $s(D_{min,2})$ von der Vorderkante 30 der hinteren Schaufel 28 entlang der Skelettlinie 42 ermittelt. Auf gleiche Art und Weise wird durch Fällen eines Lotes 50 von dem Punkt der maximalen Saugseitenkrümmung $P(k_{max})$ auf die Skelettlinie 42 ein Abstand der maximalen Saugseitenkrümmung $s(k_{max})$ von der Vorderkante 30 entlang der Skelettlinie 42 ermittelt. Für den Abstand der maximalen Saugseitenkrümmung $s(k_{max})$ gilt im Sinne der Erfindung:

$$s(D_{min,2}) + 0{,}05 \times (s(HK(i+1)) - s(VK(i+1))) \leq s(k_{max}) \leq s(D_{min,2}) + 0{,}25 \times (s(HK(i+1)) - s(VK(i+1))),$$

wobei HK(i+1): Hinterkante 52 der hinteren Schaufel 28 einer Schaufelreihe i+1, und VK(i+1): Vorderkante 30 der hinteren Schaufel 28 einer Schaufelreihe i+1.

Hierdurch liegt das Krümmungsmaximum etwa 5 % bis 25 % relativer Skelettlinienlänge hinter der Engfläche $D_{min,2}$.

Die vorstehende Bedingung nach $s(k_{max})$ ergibt die folgende Beziehung:

$$s(k_{max}) = s(D_{min,2}) + 0{,}05\ldots0{,}25 \text{ x } (s(HK(i+1)) - s(VK(i+1))) \text{ bzw. } s(k_{max}) = s(D_{min,2}) + 0{,}05\ldots0{,}25 \text{ x } (s(52) - s(30)).$$

Bevorzugterweise gilt:

$$s(k_{max}) = s(D_{min,2}) + 0{,}15 \text{ x } (s(HK(i+1)) - s(VK(i+1)))$$

Offenbart ist eine Schaufelgruppenanordnung für eine Strömungsmaschine zur Bildung einer Schaufelreihengruppe, wobei jeweils eine vordere Schaufel mit einer hinteren Schaufel einen Überdeckungsbereich bildet, der ein Kontraktionsverhältnis aufweist, das sich im Bereich von 1,2 bis 2,8 bewegt, sowie eine Strömungsmaschine mit einem derartigen Kontraktionsverhältnis zwischen einer vorderen und einer hinteren Schaufel.

Bezugszeichenliste

| | |
|---|---|
| 2 | rotorseitige Schaufelreihengruppe |
| 4 | statorseitige Schaufelreihengruppe |
| 6 | verstellbare Schaufelreihengruppe |
| 8 | vordere Schaufel |
| 10 | hintere Schaufel |
| 12 | Nabe |
| 14 | Gehäuse |
| 16 | Dichtspalt |
| 18 | Drehteller |
| 20 | Drehteller |
| 22 | Querachse |
| 24 | Überdeckungsbereich |
| 26 | vordere Schaufel |
| 28 | hintere Schaufel |
| 30 | Vorderkante |
| 32 | Hinterkante |
| 34 | Druckseite |
| 36 | Saugseite |
| 38 | Überdeckungsbereich |
| 40 | Lot |
| 42 | Skelettlinie hintere Schaufel |
| 44 | Lot |
| 46 | Skelettlinie vordere Schaufel |
| 48 | Lot |
| 50 | Lot |
| 52 | Hinterkante |
| $D_{min}$ | Engfläche |
| $D_{min,1}$ | Austrittsfläche |
| $D_{min,2}$ | Eintrittsfläche |
| i | Schaufelreihe |
| HK | Hinterkante |
| k | Krümmung |
| $k_m$ | mittlere Krümmung |
| $k_{max}$ | Krümmungsmaximum |
| KV | Kontraktionsverhältnis |

VK Vorderkante

## Patentansprüche

1. Schaufelgruppenanordnung für eine Strömungsmaschine zur Bildung einer Schaufelreihengruppe, mit einer vorderen Schaufel (26) und mit einer hinteren Schaufel (28), die in Axialund Umfangsrichtung der Schaufelgruppenanordnung versetzt zueinander angeordnet sind und einen Überdeckungsbereich (38) in Strömungsrichtung bilden, der zwischen einer Druckseite (34) der vorderen Schaufel (26) und zwischen einer Saugseite (36) der hinteren Schaufel (28) verläuft, wobei der Überdeckungsbereich (38) einen konvergenten Verlauf hat, so dass die Druckseite (34) der vorderen Schaufel (26) und die Saugseite (36) der hinteren Schaufel (28) in Strömungsrichtung düsenartig verjüngt zueinander verlaufen, **dadurch gekennzeichnet, dass** ein Kontraktionsverhältnis (KV) zwischen einer Eintrittsfläche ($D_{min,1}$), die als kleinster Abstand zwischen einer Vorderkante (30) der hinteren Schaufel (28) und der Druckseite (34) der vorderen Schaufel (26) multipliziert mit einer radialen Einheitshöhe definiert ist, und einer Austrittsfläche ($D_{min,2}$), die durch den kleinsten Abstand zwischen der Saugseite (36) der hinteren Schaufel (28) und der Druckseite (34) der vorderen Schaufel (26) multipliziert mit einer radialen Einheitshöhe beschrieben ist, in einem Bereich von $1,2 \leq KV \leq 2,8$ liegt.

2. Schaufelgruppenanordnung nach Anspruch 1, wobei das Kontraktionsverhältnis (KV) KV = 1,7 ist.

3. Schaufelgruppenanordnung nach Anspruch 1 oder 2, wobei die Saugseite (36) der hinteren Schaufel (30) stromab der Austrittsfläche ($D_{min,2}$) eine größere Krümmung (k) als stromauf der Austrittsfläche ($D_{min,2}$) aufweist.

4. Schaufelgruppenanordnung nach Anspruch 3, wobei die Krümmung (k) ein Maximum ($k_{max}$) vom 1,6-Fachen bis zum 1,7-Fachen einer mittleren Krümmung ($k_m$) der Saugseite (36) der hinteren Schaufel (30) hat.

5. Schaufelgruppenanordnung nach Anspruch 4, wobei das Krümmungsmaximum ($k_{max}$) etwa 5 % bis 25 % relativer Skelettlinienlänge hinter der Austrittsfläche ($D_{min,2}$) liegt.

6. Strömungsmaschine mit zumindest einer Schaufelreihengruppe mit einer Vielzahl von Schaufelgruppenanordnungen nach einem in einem der vorhergehenden Ansprüche.

## Claims

1. A blade group assembly for a turbomachine, for forming a blade row group, said blade group assembly having a front blade (26) and a rear blade (28) which are offset to each other in the axial and circumferential directions of the blade group assembly and form an overlap region (38) in the flow direction, said overlap region running between a pressure surface (34) of the front blade (26) and a suction surface (36) of the rear blade (28), the overlap region (38) having a convergent profile so that the pressure surface (34) of the front blade (26) and the suction surface (36) of the rear blade (28) taper in a nozzle-like manner relative to each other in the flow direction, **characterised in that** a contraction ratio (KV) between an inlet area ($D_{min,1}$), which is defined as the smallest distance between a leading edge (30) of the rear blade (28) and the pressure surface (34) of the front blade (26) multiplied by a radial unit height, and an outlet area ($D_{min,2}$), which is described by the smallest distance between the suction surface (36) of the rear blade (28) and the pressure surface (34) of the front blade (26) multiplied by a radial unit height, is within the range of $1.2 \leq KV \leq 2.8$.

2. The blade group assembly according to Claim 1, wherein the contraction ratio (KV) is KV = 1.7.

3. The blade group assembly according to Claim 1 or 2, wherein the suction surface (36) of the rear blade (30) has a greater curvature (k) downstream of the outlet area ($D_{min,2}$) than upstream of the outlet area ($D_{min,2}$).

4. The blade group assembly according to Claim 3, wherein the curvature (k) has a maximum ($k_{max}$) of 1.6 to 1.7 times an average curvature ($k_m$) of the suction surface (36) of the rear blade (30).

5. The blade group assembly according to Claim 4, wherein the curvature maximum ($k_{max}$) lies approximately 5% to 25% of the relative mean camber line length behind the outlet area ($D_{min,2}$).

6. A turbomachine having at least one blade row group having a plurality of blade group assemblies according to any one of the preceding claims.

**Revendications**

1. Agencement de groupes d'aubes en tandem, destiné à une turbomachine pour créer un groupe de rangées d'aubes, pourvu d'une aube (26) antérieure et d'une aube (28) postérieure, qui dans la direction axiale et périphérique de l'agencement de groupes d'aubes sont placées avec un décalage mutuel et forment une zone de recouvrement (38) dans la direction d'écoulement qui s'écoule entre un côté pression (34) de l'aube (26) antérieure et entre un côté aspiration (36) de l'aube (28) postérieure, la zone de recouvrement (38) présentant un trajet convergent, de telle sorte que le côté pression (34) de l'aube (26) antérieure et le côté aspiration (36) de l'aube (28) postérieure s'écoulent avec un rétrécissement en forme de buse dans la direction d'écoulement, **caractérisé en ce qu'**un rapport de contraction (KV) entre une surface d'entrée ($D_{min.1}$) qui est définie en tant qu'un écart le plus petit entre une arête (30) antérieure de l'aube (28) postérieure et le côté pression (34) de l'aube (26) antérieure, multiplié par une hauteur unitaire radiale et une surface de sortie ($D_{min.2}$) qui est décrite par le plus petit écart entre le côté aspiration (36) de l'aube (28) postérieure et le côté pression (34) de l'aube (26) antérieure, multiplié par une hauteur unitaire radiale se situe dans l'ordre de $1,2 \leq KV \leq 2,8$.

2. Agencement de groupes d'aubes selon la revendication 1, le rapport de contraction (KV) étant de KV = 1,7.

3. Agencement de groupes d'aubes selon la revendication 1 ou 2, le côté aspiration (26) de l'aube (30) postérieure en aval de la surface de sortie ($D_{min.2}$) présentant une courbure (k) plus grande qu'en amont de la surface de sortie ($D_{min.2}$).

4. Agencement de groupes d'aubes selon la revendication 3, la courbure (k) présentant un maximum ($k_{max}$) de 1,6 fois à 1,7 fois la surface d'une courbure moyenne ($k_m$) du côté aspiration (36) de l'aube (30) postérieure.

5. Agencement de groupes d'aubes selon la revendication 4, le maximum de courbure ($k_{max}$) se situant à environ de 5 % à 25 % de la ligne squelettique relative à l'arrière de la surface de sortie ($D_{min.2}$).

6. Turbomachine pourvue d'au moins un groupe de rangées d'aubes pourvue d'une pluralité d'agencement de groupes d'aubes selon l'une quelconque des revendications précédentes.

14
12
24
4
6
18
22
10
2
16
8
20

Stand der Technik

Fig. 1

x
r·θ
r

EP 2 626 515 B1

Fig. 2

Detail A

32
36
28
38

26
34
30

x
r·θ

8

Fig. 3

Detail A

26

32

C

$D_{min,2}$

B

D

34

36

$D_{min,1}$

$r \cdot \theta$

x

A

30

28

Fig. 4

EP 2 626 515 B1

10

26

x

r · θ

28
36
50
48
32, HK(i)
$D_{min,2}$
D
$s(D_{min,2})$
42
30, VK(i+1)
s
$P(k_{max})$
$s(k_{max})$
52, HK(i+1)

k
$k_{max}$
$k_m$
$k_{max} = 1.6...2.7 \times k_m$
s
$s(HK(i+1))$
$s(k_{max})$
$s(D_{min,2})$
$s(VK(i+1))$

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009013399 A1
- EP 0823540 B1
- US 3195807 A
- DE 102008040698 A1
- DE 390486 C
- WO 2008060195 A1
- EP 2351920 A1